Europäisches Patentamt

European Patent Office

Office européen des brevets

(19)

(11) Veröffentlichungsnummer: **0 248 944 B1**

(12)

# EUROPÄISCHE PATENTSCHRIFT

(45) Veröffentlichungstag der Patentschrift: **12.02.92**

(21) Anmeldenummer: **86116347.5**

(22) Anmeldetag: **25.11.86**

Teilanmeldung 91100138.6 eingereicht am 25/11/86.

(51) Int. Cl.⁵: **F16K 25/00**, F16J 15/30

(54) **Absperrventil.**

(30) Priorität: **03.12.85 DE 3542636**
**16.09.86 DE 3631447**
**08.07.86 DE 3622889**

(43) Veröffentlichungstag der Anmeldung:
**16.12.87 Patentblatt 87/51**

(45) Bekanntmachung des Hinweises auf die Patenterteilung:
**12.02.92 Patentblatt 92/07**

(84) Benannte Vertragsstaaten:
**AT DE ES FR GB IT SE**

(56) Entgegenhaltungen:
**AT-B- 104 270**
**DE-A- 2 903 453**
**US-A- 3 404 061**
**US-A- 4 068 853**

(73) Patentinhaber: **Klinger AG**
**Baarerstrasse 10**
**CH-6301 Zug(CH)**

(72) Erfinder: **Huber, Richard**
**Fürstenstrasse 17b**
**A-2340 Mödling(AT)**
Erfinder: **Wirz, Peter**
**Im Juch 733**
**CH-5726 Unterkulm (AG)(CH)**

(74) Vertreter: **Sparing Röhl Henseler Patentan-**
**wälte European Patent Attorneys**
**Rethelstrasse 123**
**W-4000 Düsseldorf 1(DE)**

EP 0 248 944 B1

## Beschreibung

Die Erfindung betrifft ein Absperrorgan, insbesondere Ventil, mit einem einen Strömungskanal bildenden Gehäuse und einem relativ zu dem Gehäuse verlagerbaren Sperrglied, das unter Zwischenschaltung einer Blähgraphit enthaltenden Weichstoff-Dichtung eine Gehäusebohrung im Strömungskanal absperrt, sowie einen Dichtungsring zum Einbau in ein derartiges Absperrorgan.

Absperrorgane der hier in Rede stehenden Art sind beispielsweise Kolbenschieber, bei denen das Sperrglied ein axial verlagerbarer Kolben ist, oder Kükenhähne, bei denen das Sperr- oder Ventilglied ein um eine Achse drehbares Küken ist. Im ersteren Fall wird der Kolben gegen das Gehäuse durch mindestens einen Dichtring abgedichtet, im letzteren Fall wird das Küken gegen das Gehäuse durch eine Büchse abgedichtet.

Bei Absperrorganen ist die Verwendung von Dichtungen aus expandiertem Graphit bekannt, die den Nachteil besitzen, daß sie einerseits in vielen Fällen zu hohe Reibwerte und andererseits nicht genügend Erosionsfestigkeit aufweisen, wenn sie dem strömenden Medium ausgesetzt sind. Insbesondere weisen solche bekannten Dichtungen zu niedrige Dichte auf und sind durch Formpressen eines zur Achse koaxialen Wickels einer Graphitfolie mit etwa der Breite der Axialabmessung von Dichtring bzw. Büchse hergestellt. Mit einer solchen Dichte ausgestattete Ventile haben eine relativ geringe Lebensdauer, auch dann, wenn eine sogenannte Nachdichtung möglich ist, bei welcher also die Dichtung bei Undichtheit axial zusammengepreßt werden kann. Das axiale Zusammenpressen in der Produktion oder beim Nachdichten bewirkt ein unkontrolliertes Ausknicken der einzelnen Lagen des Wickels, so daß Inhomogenitäten entstehen, welche die Lebensdauer negativ beeinflussen. Außerdem erhöht sich bei jedem Nachdichten die Betätigungskraft, weil die innerste Lage des Wickels ebenflächig, insbesondere auch mit unterschiedlicher, örtlich stark überhöhter Pressung an dem Absperrglied anliegt, und bei Anströmung lösen sich leicht Teilchen ab.

Aus der DE-A-2 903 453 ist es bekannt, einen Dichtungsring für Stopfbüchsen aus Schnitzel aus Graphitfolien oder -blöcken herzustellen, die - wahllos orientiert - komprimiert sind. Hierbei wird ein isotropes Verhalten des Materials angestrebt, so daß dieses unter der Einwirkung der Stopfbüchsenbrille seine Dimension umbilden kann und nicht so genau den Dimensionen einer bestimmten Stopfbüchse angepaßt werden kann. Bei einer Stopfbüchse wird der Dichtungsring ständig vollkommen gekammert - im Gegensatz zu einem Absperrorgan, dessen Durchgang unter Zwischenschaltung einer Dichtung wahlweise vom Sperrglied freigegeben wird. Deshalb ist ein derartiger fließfähiger Dichtungsring nicht für Absperrorgane geeignet, da er hierbei sehr leicht erodiert würde.

Aufgabe der Erfindung ist es, ein Absperrorgan der eingangs genannten Art zu schaffen, bei dem die Vorteile von expandiertem Graphit als Dichtwerkstoff, nämlich die weitgehende Unabhängigkeit von der Betriebstemperatur, ausgenützt werden können, ohne dessen Nachteile in Kauf nehmen zu müssen.

Diese Aufgabe wird dadurch gelöst, daß die WeichstoffDichtung aus Pulver aus Blähgraphit, ggfs. mit pulverförmigen oder körnigen Beimengungen, gepreßt ist, wobei der Blähgraphit im eingebauten Zustand eine Dichte von 1,5 bis 2,2 g/cm$^3$, vorzugsweise 1,6 bis 1,95 g/cm$^3$ aufweist.

Ein derartiges Absperrorgan ist bei geringer Betätigungskraft praktisch nachziehfrei und hat eine befriedigende Lebensdauer, weil die einzelnen verformten Blähgraphitteilchen genügend hohe Dichte aufweisen und nicht mit einer Fläche am Absperrglied anliegen.

Dabei ist unter "Pulver" unverarbeitetes Graphitexpandat zu verstehen, auch wenn es bereits einem Verdichtungsvorgang unterworfen war, (jedoch kein gemahlener Abfall) gegebenenfalls mit pulverförmigen oder körnigen Beimengungen, z.B. Füllstoffen.

Die Dichtung kann im Gehäuse oder im Absperrglied angeordnet sein. Dabei kann sie bereits mit der gewünschten Dichte eingebracht und dort im Gehäuse oder Kolben abgedichtet unverschieblich festgehalten sein. Andererseits ist es auch möglich, sie mit einer geringeren Dichte zu fertigen und erst nach dem Einbau im Gehäuse oder Absperrglied zusätzlich auf die gewünschte Dichte zu pressen. Dies ist insbesondere dann von Vorteil, wenn gestanzte Lamellen verwendet werden, die nicht vor dem Einbau vorgepreßt werden, weil dann die Anpassung auf die genauen Durchmesserverhältnisse bei der Montage erfolgen kann.

Wenn ein Kolbenschieber ein zusätzliches ringförmiges Dichtelement aufweist, das ebenso wie der Dichtring in die Gehäusebohrung eingelassen ist und zur Abdichtung nach außen mit dem Kolben zusammenwirkt, kann dieses Dichtelement eine geringere Dichte aufweisen, weil damit der Reibungswiderstand zusätzlich vermindert wird.

Um die Erosionsfestigkeit weiter zu verbessern, kann der Dichtring mit einem Schutzring abgedeckt sein, der zum Nennmaß der dynamisch abdichtenden Dichtringfläche oder der Gegenfläche im Durchmesser ein Spiel von maximal 1 mm aufweist. Dadurch ist es im Rahmen der vorgesehenen Grenzen möglich, eine relativ geringe Dichte zu wählen, weil dann die beim öffnen und Schließen des Ventils gefährdete Dichtringkante durch den Schutzring geschützt ist. Dieser kann entweder im Kolbenschieber durch einen Bestandteil desselben, z.B. ein Distanzstück, gebildet sein; vorteilhaft ist aber ein gesonderter Ring mit der Stirnseite des Dichtringes verbunden.

Weitere vorteilhafte Ausgestaltungen gehen aus der nachfolgenden Beschreibung und den Unteransprüchen hervor.

Die Erfindung wird nachstehend anhand von in den Zeichnungen dargestellten Ausführungsbeispielen näher erläutert.

Fig. 1 stellt im Axialschnitt ein Absperrorgan in Form eines Kolbenschiebers dar.

Fig. 2 zeigt im Axialschnitt ein Absperrorgan in Form eines Kükenhahns.

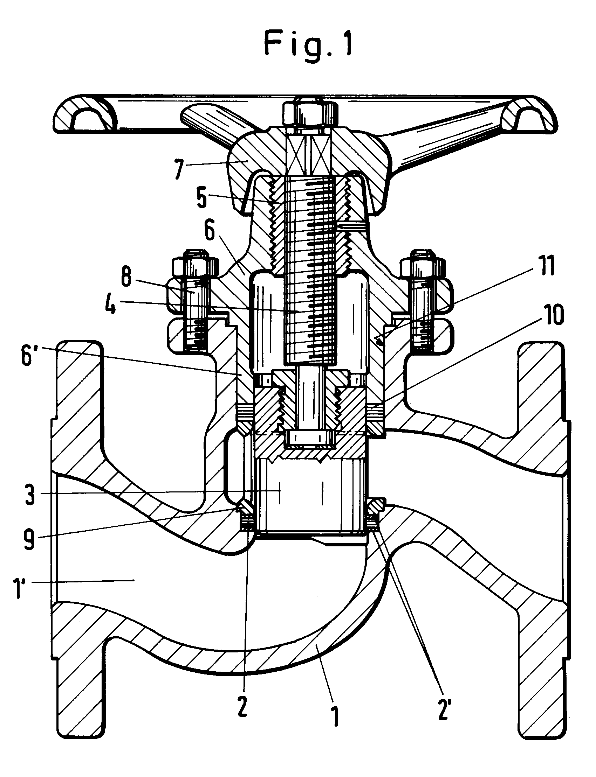

Der in Fig. 1 dargestellte Kolbenschieber ist ein Durchgangsventil mit einem im Gehäuse 1 ausgebildeten Strömungskanal 1', der von einem Dichtring 2 umschlossen ist. Dieser kann in der dargestellten Schließstellung mittels eines eingeschobenen Kolbens 3 abgeschlossen werden, der mittels einer drehbar verbundenen Spindel 4 verschiebbar ist. Die Spindel 4 ist mittels eines Gewindestückes 5 eines Oberteils 6 über ein Betätigungsorgan in Form eines Handrads 7 axial verstellbar. Das Oberteil 6 ist mittels Stiftschrauben 8 am Gehäuse 1 fest verschraubt, wobei ein rohrförmiger Fortsatz 6' des Oberteils 6 in eine Bohrung 11 des Gehäuses 1 reicht, welche auch den Dichtring 2 aufnimmt, sowie ein käfigartiges Distanzstück 9 und ein ringförmiges Dichtelement 10 zur Abdichtung nach außen aufweist. Dabei weist die Bohrung 11 im Bereich des Dichtelements 10 und des Distanzstükkes 9 einen größeren Durchmesser auf, als im Bereich zur Aufnahme des Dichtringes 2. Die so gebildete Schulter hat eine Höhe, die mindestens der Höhe des Dichtringes 2 im Anlieferzustand entspricht. Das Distanzstück 9 hat einen in diese Bohrung kleineren Durchmesser reichenden Ansatz, so daß bei Anziehen der Stiftschrauben 8 bis zum Anschlag des Oberteiles 6 am Gehäuse 1 das Distanzstück 9 mit dem äußeren Durchmesser an der Bohrungsschulter aufsitzt und den Dichtring 2 in festgelegter Höhe und der entsprechenden Dichte festhält. Da das Dichtungselement 10 eine größere Breite hat, kann es zum Toleranzausgleich zusammengepreßt werden, ohne einerseits infolge der geringeren Dichte einen zu großen Reibungswiderstand am Kolben 3 zu bewirken, aber andererseits den Dichtring 2 mit größerer Flächenpressung sicher festzuhalten. Auf diese Weise kann die Dichte des Dichtringes 2 genau eingehalten werden, wodurch ein geringer Reibungswiderstand bei guter Abdichtung gesichert ist. Der Dichtring 2 weist die vorgesehene höhere Dichte auf, damit er ausreichend gegen Erosion gesichert ist. Der Dichtring 2 besteht beim dargestellten Beispiel aus expandiertem Graphit, der direkt aus Pulver (Granulat) mit größerer Höhe gepreßt wurde und beim Verschrauben des Oberteils 6 in seine Anschlagstellung zur erforderlichen Höhe gepreßt wurde. Es ist natürlich auch möglich, den Dichtring 2 direkt in die gewünschte Endhöhe zu pressen, wobei beim Zusammenbau die Rückfederung des Dichtringes 2 zum Teil oder zur Gänze ausgeglichen werden muß. Vorzugsweise wird der Dichtring 2 jedoch höher, d.h. mit geringerer Dichte eingebaut, damit er bei eingeschobenem Kolben 3 durch das Oberteil 6 axial gepreßt wird und hierdurch radial verformt die genauen Kolbenabmessungen annimmt. Vor Einbau des Dichtringes 2 kann vorteilhaft zur Gewährleistung einer guten Abdichtung relativ zum Kolben 3 ein Untermaß von max. 0,2 mm vorgesehen werden. Bei größerem Untermaß und bei der die angestrebten Eigenschaften gewährleistenden Dichte besteht sonst die Gefahr, daß der Dichtring 2 bei der Bewegung des Kolbens 3 beschädigt wird. Der Dichtring 2 weist oben und unten an der Stirnseite einen Schutzring 2' auf, dessen Innendurchmesser nur wenig größer als der des Kolbens 3 ist, damit beim Austreten des Kolbens 3 aus dem Dichtring 2 keine Beschädigungen durch das bei geringer Spaltbreite sehr schnell strömende Medium entstehen können. Dies gilt für den, oberen Schutzring 2'. Der untere Schutzring 2 hat die gleichen Dimensionen wie der obere und gewährleistet eine einfache Demontage des unteren Dichtrings 2. Gleichzeitig ist gesichert, daß der Dichtring 2 nicht falsch eingebaut werden kann. Da Verklebungen am Dichtring 2 möglichst vermieden werden sollen, weisen die Schutzringe 2' nagelartige Verbindungselemente auf, die in das Graphitmaterial eingebettet sind. Zur Sicherung gegen Loslösen können die nagelartigen Verbindungselemente auch Widerhaken aufweisen. Statt Schutzringe 2' vorzusehen, ist es natürlich auch möglich, das käfigartige Distanzstück 9 mit solchen Toleranzen auszustatten, daß die Spaltbreite nicht größer als 0,5 mm ist, jedoch wird dies meistens nicht nur fertigungstechnisch, sondern auch funktionell zu Schwierigkeiten führen, weil dann nach längerem Einsatz die Gefahr des Festsitzens des Distanzstückes 9 im Gehäuse 1 bedeutend vergrößert ist.

Der dargestellte Kolbenschieber weist infolge der Ausbildung und gewählten Dichte für die Dichtungen eine gute und auch für lange Betriebsdauer ausreichende Abdichtfähigkeit uf, ohne daß ein Nachpressen der Dichtringe erforderlich wäre, so daß deshalb auch keine Einrichtungen hierfür vorgesehen sind; dabei sind die Betätitungskräfte gering, und die Erosionsgefahr ist weitgehend ausgeschaltet.

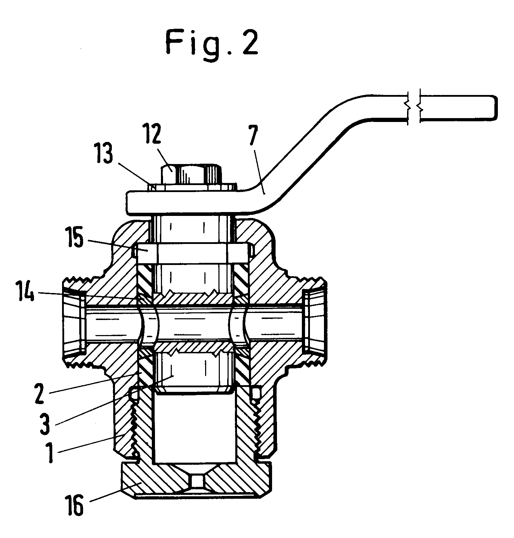

Der in Fig. 2 dargestellte Kükenhahn weist ein Gehäuse 1 auf, in dem eine als Büchse 2 ausgeführte Dichtung aus Blähgraphit abgedichtet und gegen Verdrehung gesichert ein setzt ist. Sie ist aus expandiertem Graphitpulver, das auch vorgranuliert sein kann, formgepreßt, wobei das spezifische Gewicht etwa 1,6 g/cm³ beträgt. Ein Sperrglied in Form eines zylindrischen Kükens 3 ist durch ein Betätigungsorgan in Form eines aufgesetzten Handgriffs 7 betätigbar, der über eine Schraube 12 mit zwischengeschalteter Sicherungsscheibe 13 mit dem Küken 3 verbunden ist. Die Büchse 2 weist Durchlässe auf, die durch metallische Einsatzringe 14 geschützt sind. Sie bildet auch die Halterung eines zweiteiligen, das Küken 3 axial unverschieblich haltenden Ringes 15 und ist durch eine Verschraubung 16 festgehalten. Ein stärkeres Nachpressen der Büchse 2 aus Wartungsgründen ist beim dargestellten Beispiel nicht möglich, weil die Verschraubung praktisch keinen freien Stellweg zum Gehäuse 1 aufweist. Ein geringer freier Weg ist vorteilhaft, weil beim Festklemmen der Büchse 2 durch die Verschraubung 16 ohne Vorsehen besonders genauer Längentoleranzen für die Büchse 2 kein geeignetes Drehmoment eingestellt werden kann. Es ist dabei dafür zu sorgen, daß die Büchse 2 im Kükenhahn wirklich gekammert ist.

Der dargestellte Kükenhahn ist also praktisch wartungsfrei, wobei die Lebensdauer im Vergleich zu den bekannten Hähnen dieser Art erhöht ist.

**Patentansprüche**

1. Absperrorgan, insbesondere Ventil, mit einem einen Strömungskanal (1') bildenden Gehäuse (1) und einem relativ zu dem Gehäuse (1) verlagerbaren Sperrglied (3), das unter Zwischenschaltung einer Blähgraphit enthaltenden Weichstoff-Dichtung (2) eine Gehäusebohrung (11) im Strömungskanal (1') absperrt, dadurch gekennzeichnet, daß die Weichstoff-Dichtung (2) aus Pulver aus Blähgraphit, ggfs. mit pulverförmigen oder körnigen Beimengungen, gepreßt ist, wobei der Blähgraphit im eingebauten Zustand eine Dichte von 1,5 bis 2,2 g/cm³, vorzugsweise 1,6 bis 1,95 g/cm³ aufweist.

2. Absperrorgan nach Anspruch 1, dadurch gekennzeichnet, daß die als Dichtring ausgebildete Weichstoff-Dichtung (2) kammernde Teile unverschiebbar befestigt sind und eine zusätzliche Zusammenpressung der Dichtung (2) während des Betriebes nicht möglich ist.

3. Absperrorgan nach Anspruch 1 oder 2 mit einem zusätzlichen ringförmigen Dichtelement (10), das zur Abdichtung nach außen mit einem Kolben als Sperrglied (3) zusammenwirkt, wobei die Dichtung (2) und das Dichtelement (10) in die Gehäusebohrung (11) eingelassen sind, dadurch gekennzeichnet, daß das Dichtelement (10) eine geringere Dichte als die als Dichtung ausgebildete WeichstoffDichtung (2), insbesondere zwischen 1,2 und 1,8 g/cm³, aufweist.

4. Absperrorgan nach Anspruch 3, dadurch gekennzeichnet, daß das Dichtelement (10) in Radialrichtung breiter, vorzugsweise etwa doppelt so breit wie der Dichtring (2) ist.

5. Absperrorgan nach Anspruch 4, dadurch gekennzeichnet, daß ein im Durchmesser größerer Abschnitt der Gehäusebohrung (11) für das Dichtelement (10) auch im Bereich eines käfigartigen, den Strömungsdurchlaß bildenden Distanzstückes (9) verläuft, welches, gegebenenfalls unter Verwendung eines Zwischenringes (2'), den Raum für den Dichtring (2) begrenzt.

6. Absperrorgan nach einem der Ansprüche 2 bis 5, dadurch gekennzeichnet, daß der Dichtring (2) in dem als Kolben ausgebildeten Sperrglied (3) angeordnet ist.

7. Absperrorgan nach einem der Ansprüche 3 bis 6, dadurch gekennzeichnet, daß mindestens eine Stirnfläche von den Dichtring (2) und das Dichtelement (10) kammernden Teilen zur Aufnahme von Toleranzen eine Profilierung vorzugsweise mit Zylinder- und/oder Kegelflächen aufweist.

8. Absperrorgan nach einem der Ansprüche 2 bis 7, dadurch gekennzeichnet, daß der Dichtring (2) an seiner die Öffnungskante bildenden Stirnseite durch einen Ring (2') aus erosionsfestem Material abgedeckt ist, der zur dynamisch abdichtenden Gegenfläche an dem als Kolben ausgebildeten Sperrglied (3) im Durchmesser ein Spiel aufweist.

9. Absperrorgan nach Anspruch 1, dadurch gekennzeichnet, daß das Sperrglied (3) ein drehbares Küken ist und zwischen Küken und Gehäuse (1) eine abdichtende Büchse aus Blähgraphit als Weichstoffdichtung (2) angeordnet ist.

10. Dichtungsring zum Einbau in ein Absperrorgan nach einem der Ansprüche 2 bis 8, dadurch gekennzeichnet, daß er aus Blähgraphit, ggfs. mit pulverförmigen oder körnigen Beimengungen, auf eine Dichte von 1,3 bis 1,95 g/cm³ vor dem Einbau formgepreßt und bei der Montage auf die Enddichte bringbar ist.

11. Dichtring nach Anspruch 10, dadurch gekennzeichnet, daß seine dynamisch abdichtende Zylinderfläche im Durchmesser relativ zum Nennmaß im Sinne eines Paßsitzes ein Übermaß bis 0,25 mm, vorzugsweise 0,05 bis 0,2 mm, aufweist.

12. Dichtring nach Anspruch 11, dadurch gekennzeichnet, daß seine radiale Breite mindestens das 0,03-fache des Ringinnendurchmessers in mm + 2,5 mm beträgt.

13. Dichtring nach Anspruch 12, dadurch gekennzeichnet, daß seine axiale Höhe mindestens 3 mm, vorzugsweise aber nicht größer als das 1,4-fache seiner radialen Breite ist.

14. Dichtring nach einem der Ansprüche 10 bis 13, dadurch gekennzeichnet, daß er auf mindestens einer Stirnseite mit einem Metallring (2') versehen ist, der zum Nennmaß der dynamisch abdichtenden Dichtringfläche im Durchmesser Spiel aufweist.

15. Dichtring nach Anspruch 14, dadurch gekennzeichnet, daß das Spiel maximal 1 mm beträgt.

16. Dichtring nach Anspruch 14, dadurch gekennzeichnet, daß der Metallring (2') mittels nagel- oder klammerartiger Verbindungselemente mit dem Dichtungsmaterial verbunden ist.

17. Dichtring nach Anspruch 16, dadurch gekennzeichnet, daß die nagelartigen Verbindungselemente Widerhaken aufweisen.

18. Büchse zum Einbau in ein Absperrorgan nach Anspruch 9, dadurch gekennzeichnet, daß sie aus Blähgraphit, ggfs. mit pulverförmigen oder körnigen Beimengungen, formgepreßt ist und ein spezifisches Gewicht von 1,6 bis 1,95 g/cm³ aufweist.

19. Büchse nach Anspruch 18 zum Einbau in ein Ventil in Form eines Kükenhahns mit einem zylindrischen Küken, dadurch gekennzeichnet, daß sie zum Gehäuse (1) mindestens ein Übermaß von 0,01 mm und zu dem zylindrischen Küken (3) mindstens ein Übermaß von 0,01 mm aufweist.

**Claims**

1. Shut-off device, especially a valve, having a housing (1) forming a flow channel (1') and a shut-off member (3) which is displaceable relative to the housing (1) and which, with the interpolation of a soft seal (2) containing expanded graphite, shuts off a housing bore (11) in the flow channel (1'), characterised in that the soft seal (2) is pressed from powder of expanded graphite, optionally with powdery or granular admixtures, the expanded graphite in the installed state having a density of from 1.5 to 2.2 g/cm³, preferably 1.6 to 1.95 g/cm³.

2. Shut-off device according to Claim 1, characterised in that parts enclosing the soft seal (2) which is in the form of a sealing ring are immovably fixed and additional compression of the seal (2) during operation is not possible.

3. Shut-off device according to Claim 1 or 2 having an additional annular sealing element (10) which for sealing towards the outside co-operates with a piston as shut-off member (3), the seal (2) and the sealing element (10) being let into the housing bore (11), characterised in that the sealing element (10) has a lesser density than the soft seal (2) which is in the form of a seal, especially between 1.2 and 1.8 g/cm³.

4. Shut-off device according to Claim 3, characterised in that the sealing element (10) is wider in a radial direction, preferably twice as wide, as the sealing ring (2).

5. Shut-off device according to Claim 4, characterised in that a section of larger diameter of the housing bore (11) for the sealing clement (10) also extends in the region of a cage-like spacer member (9) which forms the flow passage and which, optionally using an intermediate ring (2'), defines the space for the sealing ring (2).

6. Shut-off device according to one of Claims 2 to 5, characterised in that the sealing ring (2) is arranged in the shut-off member (3) which is in the form of a piston.

7. Shut-off device according to one of Claims 3 to 6, characterised in that at least one end face of parts enclosing the sealing ring (2) and the sealing element (10), in order to take up tolerances, has a profiling preferably with cylindrical and/or conical surfaces.

8. Shut-off device according to one of Claims 2 to 7, characterised in that the sealing ring (2) on its end face forming the opening edge is covered over by means of a ring (2') of erosion-resistant material which with respect to the dynamically sealing complementary surface on the shut-off member (3) which is in the form of a piston has some play in the diameter.

9. Shut-off device according to Claim 1, characterised in that the shut-off member (3) is a rotatable plug and between the plug and the housing (1) a sealing bush of expanded graphite is arranged as a soft seal (2).

10. Sealing ring for installation in a shut-off device according to one of Claims 2 to 8, characterised in that before installation it is pressed in a mould from expanded graphite, optionally with powdery or granular admixtures, to a density of from 1.3 to 1.95 g/cm$^3$ and is arranged to be brought to the final density during assembly.

11. Sealing ring according to Claim 10, characterised in that its dynamically sealing cylindrical surface has in diameter, relative to the nominal dimension for a snug fit, an oversize of up to 0.25 mm, preferably 0.05 to 0.2 mm.

12. Sealing ring according to Claim 11, characterised in that its radial width is at least 0.03 times the inside diameter of the ring in mm + 2.5 mm.

13. Sealing ring according to Claim 12, characterised in that its axial height is at least 3 mm, but preferably not more than 1.4 times its radial width.

14. Sealing ring according to one of Claims 10 to 13, characterised in that it is provided on at least one end face with a metal ring (2') which with respect to the nominal dimension of the dynamically sealing surface of the sealing ring has some play in the diameter.

15. Sealing ring according to Claim 14, characterised in that the play is at most 1 mm.

16. Sealing ring according to Claim 14, characterised in that the metal ring (2') is connected to the sealing material by means of nail-like or clamp-like connecting elements.

17. Sealing ring according to Claim 16, characterised in that the nail-like connecting elements have barbs.

18. Bush for installation in a shut-off device according to Claim 9, characterised in that it is pressed in a mould from expanded graphite, optionally with powdery or granular admixtures, and has a specific weight of from 1.6 to 1.95 g/cm$^3$.

19. Bush according to Claim 18, for installation in a valve in the form of a tap cock having a cylindrical plug, characterised in that with respect to the housing (1) it has an oversize of at least 0.01 mm and with respect to the cylindrical plug (3) has an oversize of at least 0.01 mm.

**Revendications**

1. Organe d'arrêt, en particulier vanne d'arrêt, comportant un boîtier (1) formant un canal de passage du fluide (1') et un élément d'arrêt (3) mobile par rapport audit boîtier (1) et obturant, avec interposition d'un joint (2) en matériau compressible contenant du graphite expansible, un alésage (11) du boitier ménagé dans le canal (1'), caractérisé par le fait que le joint (2) en matériau compressible est réalisé par compression de poudre de graphite expansible contenant éventuellement des additifs sous forme de granulés ou sous forme de poudre, ledit graphite expansible présentant à l'état monté une masse volumique de 1,5 à 2,2 g/cm$^3$, de préférence de 1,6 à 1,95 g/cm$^3$.

2. Organe d'arrêt selon la revendication 1, caractérisé par le fait que sur le joint (2) en matériau compressible réalisé sous la forme d'un joint annulaire, des parties formant des chambres fermées sont fixées de manière non mobile et par le fait qu'une compression ultérieure du joint (2) en service est impossible.

3. Organe d'arrêt selon la revendication 1 ou 2, comportant un élément d'étanchéité complémentaire (10) sous forme de bague qui coopère, pour réaliser l'étanchéité vers l'extérieur, avec un piston pour former l'organe d'arrêt (3), ledit joint (2) et l'élément d'étanchéité (10) étant insérés dans l'alésage (11) du boîtier, caractérisé par le fait que l'élément d'étanchéité (10) présente une masse volumique inférieure à celle du joint (2) en matériau compressible réalisé sous la forme d'un joint d'étanchéité, comprise en particulier entre 1,2 et 1,8 g/cm$^3$.

4. Organe d'arrêt selon la revendication 3, caractérisé par le fait que l'élément d'étanchéité (10) est, dans le sens radial, plus large, de préférence environ le double, que la bague d'étanchéité (2).

5. Organe d'arrêt selon la revendication 4, caractérisé par le fait qu'une section de l'alésage (11) de plus grand diamètre, destiné à l'élément d'étanchéité (10), s'étend également au droit d'une pièce d'entretoisement (9), du type cage, délimitant l'orifice de passage du fluide, ladite pièce d'entretoisement (9) délimitant l'espace réservé à la bague (2), éventuellement avec utilisation d'un joint intermédiaire (2').

6.  Organe d'arrêt selon l'une des revendications 2 à 5, caractérisé par le fait que la bague d'étanchéité (2) est disposée dans l'élément d'arrêt (3) réalisé sous forme de piston.

7.  Organe d'arrêt selon l'une des revendications 3 à 6, caractérisé par le fait qu'au moins une face frontale des parties formant chambres de la bague (2) et de l'élément (10) présente, à des fins d'admission de tolérances, un profil comportant de préférence des faces cylindriques et/ou coniques.

8.  Organe d'arrêt selon l'une des revendications 2 à 7, caractérisé par le fait que la bague d'étanchéité (2) est recouverte sur sa face frontale délimitant l'orifice de passage par une bague (2') en matière résistant à l'érosion, qui présente un certain jeu diamétral par rapport à la contre-face dont l'étanchéité dynamique doit être réalisée, placée sur l'élément d'arrêt (3) réalisé sous forme de piston.

9.  Organe d'arrêt selon la revendication 1, caractérisé par le fait que l'élément d'arrêt (3) est un boisseau de robinet rotatif et que, entre ce boisseau et le boîtier (1), est disposée une douille étanche en graphite expansible servant de joint (2) en matériau compressible.

10. Bague d'étanchéité pour montage dans un organe d'arrêt selon l'une des revendications 2 à 8, caractérisée par le fait qu'elle est réalisée en graphite expansible contenant éventuellement des additifs sous forme de poudre ou de granulés et comprimés en forme avant son montage pour présenter une masse volumique de 1,3 à 1,95 g/cm$^3$, la masse volumique finale étant obtenue lors du montage.

11. Bague d'étanchéité selon la revendication 10, caractérisée par le fait que sa forme cylindrique réalisant l'étanchéité dynamique est surdimensionnée de 0,25 mm au maximum, de préférence de 0,05 à 0,2 mm, pour ce qui concerne son diamètre par rapport à la cote nominale prévue pour son insertion.

12. Bague d'étanchéité selon la revendication 11, caractérisée par le fait que sa largeur radiale est égale à au moins 0,03 fois le diamètre intérieur d la bague en mm plus 2,5 mm.

13. Bague d'étanchéité selon la revendication 12, caractérisée par le fait que sa hauteur axiale est égale à au moins 3 mm, mais de préférence non supérieure à 1,4 fois sa largeur radiale.

14. Bague d'étanchéité selon l'une des revendications 10 à 13, caractérisée par le fait qu'elle est munie sur au moins l'une de ses faces frontales d'une bague métallique (2') qui présente un certain jeu diamétral par rapport à la cote nominale de la face de la bague d'étanchéité chargée d'assurer l'étanchéité dynamique.

15. Bague d'étanchéité selon la revendication 14, caractérisée par le fait que le jeu maximal est égal à 1 mm.

16. Bague d'étanchéité selon la revendication 14, caractérisée par le fait que la bague métallique (2') est reliée au matériau d'étanchéité au moyen d'éléments de fixation du type clous ou agrafes.

17. Bague d'étanchéité selon la revendication 16, caractérisée par le fait que les éléments de fixation du type clous sont des clous barbelés.

18. Douille pour l'incorporation dans un organe d'arrêt selon la revendication 9, caractérisée par le fait qu'elle est réalisée en graphite expansible, éventuellement avec additifs sous forme de poudre ou de granulés, comprimé dans un moule et présentant une masse volumique de 1,6 à 1,95 g/cm$^3$.

19. Douille selon la revendication 18 pour incorporation dans une vanne ayant la forme d'un robinet à boisseau comportant un boisseau cylindrique, caractérisée par le fait que ladite douille, par rapport au boîtier (1), est surdimensionnée d'au moins 0,01 mm et, par rapport au boisseau cylindrique (3), d'au moins 0,01mm.

# Fig.1

# Fig. 2